# EUROPÄISCHE PATENTANMELDUNG

(11) **EP 3 222 600 A1**
(43) Veröffentlichungstag der Anmeldung: **27.09.2017**
(21) Anmeldenummer: 16161963.0
(22) Anmeldetag: 23.03.2016
(51) Int. Cl.: C04B 28/04

(54) **SCHNELL ERHÄRTENDE BETONZUSAMMENSETZUNG**

(71) Anmelder: Technische Universität Graz, 8010 Graz (AT)
(72) Erfinder: Hadl, Philipp, 8010 Graz (AT); Nguyen, Viet Tue, 8010 Graz (AT)
(74) Vertreter: Patentanwaltskanzlei Matschnig & Forsthuber OG

(57) **Zusammenfassung**

Die Erfindung betrifft eine Betonzusammensetzung, welche pro Kubikmeter [m³] Beton aufweist:
• 500 - 750 kg Zement mit einem Blaine Wert > 4000 und < 6000 cm²/g,
• 30 - 100 kg Mikrosilika,
• 100 - 400 kg Gesteinsmehl und/ oder Quarzmehl,
• 10 - 40 kg Fließmittel,
• 155 - 250 kg Wasser, einschließlich des im Fließmittel und im Erhärtungsbeschleuniger enthaltenen Wassers,
• 10 - 40 kg Erhärtungsbeschleuniger,
• 600 - 2000 kg Zuschlagstoff mit einer Korngröße > 0,01 mm und < 10 mm, und
• 0 - 250 kg Mikrofasern,
wobei die Betonzusammensetzung einen Wasserzementwert von 0,31 - 0,33 aufweist.

## Beschreibung

Die Erfindung betrifft eine sehr schnell erhärtende Betonzusammensetzung zur Herstellung von Hoch- oder Ultrahochleistungsbeton mit sehr hoher Druckfestigkeit.

Beton ist der meistverwendete Werkstoff im Bauwesen. In den vergangenen Jahren wurde auf nationaler und internationaler Ebene intensiv an der Entwicklung von Betonen mit immer höheren Druckfestigkeiten geforscht. Hochleistungsbeton (High Performance Concrete, HPC) und Ultrahochleistungsbeton (Ultra High Performance Concrete, UHPC) stellen in diesem Zusammenhang den aktuellen Entwicklungsstand dar. UHPC ist besonders gefügedicht und erreicht je nach Zusammensetzung und Herstellverfahren eine Druckfestigkeit von über 150 N/mm². Neben hohen Festigkeiten weist UHPC eine äußerst geringe Permeabilität gegenüber Gasen und Flüssigkeiten auf, wodurch dieser Beton auch unter aggressiver Umweltexposition hervorragende Dauerhaftigkeitseigenschaften besitzt. Auch gegenüber mechanischen Beanspruchungen wie z.B. Verschleiß- oder Stoßbeanspruchung, ist UHPC äußerst widerstandsfähig. Mit UHPC sind somit dauerhafte Betonkonstruktionen mit geringen Lebenszykluskosten möglich. UHPC ermöglicht nicht nur die Konstruktion hochtragfähiger, korrosionsbeständiger Bauwerke, insbesondere für großtechnische Anwendungen, sondern eignet sich auch bestens für die Sanierung und Verstärkung bestehender Bauwerke.

Betonzusammensetzungen und -rezepturen für herkömmliche Hoch- bzw. Ultrahochleistungsbetone sind aus dem Stand der Technik hinlänglich bekannt. Die bekannten HPC- bzw. UHPC-Rezepturen erreichen jedoch erst nach ca. 12 Stunden eine Würfeldruckfestigkeit von > 25 N/mm². Schneller erhärtende HPC- bzw. UHPC-Rezepturen gibt es nach derzeitigem Wissen der Erfinder der vorliegenden Erfindung noch nicht.

Aus dem Stand der Technik sind schnell erhärtende Normalbetone bekannt. Darunter sind 6-Stunden-Betone mit herkömmlichen Zementen zu verstehen, die bereits 6 Stunden nach der Wasserzugabe hohe Frühfestigkeiten (ca. 20 N/mm²) erreichen. Eine Verkürzung auf eine Zeit von unter 6 Stunden ist sehr schwer und nur unter bestimmten Voraussetzungen möglich.

Eine weitere Möglichkeit bietet die Technologie der Schnellzemente (z.B. Q-Flash der Firma Concretum, Schweiz), die bereits 2 bis 3 Stunden nach der Wasserzugabe hohe Frühfestigkeiten ermöglichen. Diese Technologie funktioniert aber nicht mit klassischen, herkömmlichen Zementen und ist in der Regel daher sehr teuer.

Sowohl 6-Stunden-Betone als auch Schnellzemente erzielen nach 28 Tagen nur Druckfestigkeiten von höchstens 50 - 80 N/mm², welche deutlich unterhalb jener von Hoch- bzw. Ultrahochleistungsbetonen liegen.

Es ist daher eine Aufgabe der Erfindung eine schneller erhärtende Betonzusammensetzung bereitzustellen, mit welcher die Vorteile der HPC- bzw. UHPC-Technologien, insbesondere hohe Endfestigkeiten in Kombination mit einer sehr hohen Frühfestigkeit sowie die Verwendung herkömmlicher Zemente, genützt werden kann.

Diese Aufgabe wird durch eine Betonzusammensetzung gelöst, welche pro Kubikmeter [m³] Beton aufweist:
- 500 - 750 kg Zement mit einem Blaine Wert > 4000 und < 6000 cm²/g,
- 30 -100 kg Mikrosilika,
- 100 - 400 kg Gesteinsmehl und/ oder Quarzmehl,
- 10 - 40 kg Fließmittel,
- 155 - 250 kg Wasser, einschließlich des im Fließmittel und im Erhärtungsbeschleuniger enthaltenen Wassers,
- 10 - 40 kg Erhärtungsbeschleuniger,
- 600 - 2000 kg Zuschlagstoff mit einer Korngröße > 0,01 mm und < 10 mm, und
- 0 - 250 kg Mikrofasern,
wobei die Betonzusammensetzung einen Wasserzementwert von 0,31 - 0,33 aufweist.

Dank der erfindungsgemäßen Betonzusammensetzung wird eine verbesserte, sehr schnell erhärtende Rezeptur für Hoch- bzw. Ultrahochleistungsbeton bereitgestellt, welche bereits 6 Stunden nach der Wasserzugabe eine Würfeldruckfestigkeit von > 25 N/mm² erreicht. Wie eingangs erwähnt wird eine derartige Festigkeit bei herkömmlichen HPC- bzw. UHPC-Zusammensetzungen erst nach ca. 12 Stunden erreicht. Trotz der sehr schnellen Erhärtung konnte die überraschende Tatsache festgestellt werden, dass der mittels der erfindungsgemäßen Betonzusammensetzung erhaltene Beton nach 28 Tagen Lagerung bei Raumklima (20°C) eine sehr hohe Druckfestigkeit von > 130 N/mm² erlangt. Im Vergleich zu anderen schnellerhärtenden Betonen (z.B. 6-Stunden-Betone) wird folglich eine wesentlich höhere Endfestigkeit erreicht. Durch die sehr schnelle Erhärtung ist es zum Beispiel möglich, Ausbesserungs- oder Sanierungsarbeiten von Verkehrsflächen in sehr kurzen Zeiträumen durchzuführen. Gleichzeitig können die Vorteile der HPC- bzw. UHPC-Technologien genützt werden.

Zur Erreichung der hohen Endfestigkeit von HPC- bzw. UHPC sind bei herkömmlichen Betonzusammensetzungen ein niedriger Wasserzementwert von höchstens 0,28 sowie ein niedriger Wasser/Bindemittelwert von höchstens 0,25 und somit eine geringe Wassermenge im Beton erforderlich, weshalb für eine gute Verarbeitbarkeit des Betons hohe Mengen an Fließmittel notwendig sind. Hochwirksame Fließmittel haben jedoch stets eine verzögernde Wirkung auf die Festigkeitsentwicklung und insbesondere auf die Frühfestigkeit. Beispielsweise zeigen Fließmittel auf Polycarboxylatether (PCE)-Basis, wie sie für UHPC eingesetzt werden, eine stark verzögernde Wirkung auf die Festigkeitsentwicklung.

Die vorliegende Erfindung stellt nun eine Betonzusammensetzung bereit, in welcher die Zementart, die Wassermenge, die Fließmittelmenge und die Menge an Erhärtungsbeschleuniger genau aufeinander abgestimmt sind. Die genaue Abstimmung der einzelnen Bestandteile der Betonzusammensetzung bewirkt einerseits eine gute Verarbeitbarkeit des Betons und andererseits sehr hohe Früh- und Endfestigkeiten. Die erfindungsgemäße Betonzusammensetzung unterscheidet sich von den herkömmlichen Betonzusammensetzungen insbesondere durch die Zugabe eines Erhärtungsbeschleunigers und durch den höheren Wasserzementwert von 0,31 - 0,33.

Als Hochleistungsbetone (HPC) werden Betone mit einer Druckfestigkeit zwischen 90 und 140 N/mm² und einer hohen mechanischen und chemischen Beständigkeit bezeichnet.

Als Ultrahochleistungsbeton (UHPC) werden Betone mit einer Druckfestigkeit zwischen 150 und 250 N/mm² bezeichnet. Neben hohen Festigkeiten weist UHPC eine äußerst geringe Permeabilität gegenüber Gasen und Flüssigkeiten auf, wodurch dieser Beton auch unter aggressiver Umweltexposition hervorragende Dauerhaftigkeitseigenschaften besitzt.

Der Wasserzementwert (W/Z-Wert) ist einer der wichtigsten Kennwerte für Betonzusammensetzungen und errechnet sich aus der Masse des Wassers dividiert durch die Masse des Zements. Die in den Ansprüchen angeführten Wassermengen berücksichtigen neben dem zugegebenen Wasser zusätzlich noch das im Fließmittel und im Erhärtungsbeschleuniger enthaltene Wasser. Würden beispielsweise die Fließmittelsuspension bzw. der Erhärtungsbeschleuniger einen Feststoffanteil von 30 Gew.-% und einen Wasseranteil von 70 Gew.-% enthalten, dann ergibt sich der W/Z-Wert aus (Zugabewasser + 0,7 x Fließmittelmenge + 0,7 x Erhärtungsbeschleunigermenge)/Zementmasse.

Der Wasser/Bindemittelwert stellt ebenfalls eine wichtige, dem Fachmann bekannte Kenngröße für Betonzusammensetzungen dar und errechnet sich aus der Masse des Wassers dividiert durch die Masse an Bindemittel. Die Bindemittelmasse ist die Summe an Zementmasse und Mikrosilikamasse in der Betonzusammensetzung.

Unter *Zuschlagstoff* ist die Gesteinskörnung (z.B. Basalt, Quarz) zu verstehen, wobei diese nach bekannter Art und Weise in feine Gesteinskörnungen, grobe Gesteinskörnungen und Korngemische unterschieden werden.

Bei bevorzugten Varianten weist die Betonzusammensetzung pro Kubikmeter [m³] Beton auf:
- 600 - 650 kg Zement mit einem Blaine Wert > 4000 und < 6000 cm²/g,
- 36 - 78 kg Mikrosilika,
- 120 -195 kg Gesteinsmehl und/oder Quarzmehl,
- 15 - 26 kg Fließmittel,
- 186 - 215 kg Wasser, einschließlich des im Fließmittel und im Erhärtungsbeschleuniger enthaltenen Wassers,
- 15 - 26 kg Erhärtungsbeschleuniger,
- 1100 -1500 kg Zuschlagstoff mit einer Korngröße > 0,01 mm und < 10 mm, und
- 0 -100 kg Mikrofasern.

Der Wasserzementwert liegt erfindungsgemäß in einem Bereich von 0,31 - 0,33.

Im Vergleich zu den aus dem Stand der Technik bekannten Schnellzementen, ermöglicht die vorliegende Erfindung den Einsatz klassischer, herkömmlicher Zemente. Mit Vorteil handelt es sich dabei um einen Portlandzement CEM I 52,5 R oder um einen Portlandzement CEM I 42,5 R, gemäß der derzeit geltenden europäischen Zementnorm EN 197-1.

Weiters ist es von Vorteil, wenn die Korngröße und die Kornzusammensetzung der als Füllstoff wirkenden Komponenten (Mikrosilika, Gesteinsmehl, Quarzmehl, Zuschlagstoffe) eine hohe Gefügedichte und einen möglichst geringen Hohlraumgehalt ergeben. Das Mikrosilika weist dabei vorzugsweise eine Korngröße > 0,01 µm und < 10 µm auf. Das Gesteinsmehl bzw. das Quarzmehl weist vorzugsweise eine Korngröße von > 0,1 µm und < 100 µm auf.

Zur Verbesserung der Zugfestigkeit und der Biegezugfestigkeit können der Betonzusammensetzung Mikrofasern zugesetzt werden, welche vorzugsweise aus der Gruppe bestehend aus Kunststofffasern, synthetischen Fasern, Stahlfasern oder einer Mischung davon ausgewählt sind.

Zum Erhalt besonders hoher Druckfestigkeiten ist es günstig, wenn der Wasser/Bindemittel-Wert 0,28 bis 0,30 beträgt. Der Wasser/Bindemittel-Wert gemäß den erfindungsgemäßen Betonzusammensetzungen ist deutlich höher als bei bekannten Betonzusammensetzungen für HPC bzw. UHPC, in welchen der Wasser/Bindemittel-Wert bei höchsten 0,25 liegt.

Bei einer vorteilhaften Weiterbildung beträgt der Gehalt an Mikrosilika höchstens 9 Gew.-% in Bezug auf den Zementgehalt, wodurch geringere Kosten und eine bessere Fließfähigkeit des Frischbetons erreicht werden. Bekannte Betonzusammensetzungen für HPC bzw. UHPC weisen einen deutlich höheren Gehalt von normalerweise mindestens 16 Gew.-% an Mikrosilika in Bezug auf den Zementgehalt auf.

Die erfindungsgemäße Betonzusammensetzung ist zweckmäßigerweise frei von chloridhaltigen Erhärtungsbeschleunigern, d.h. der/die in der Betonzusammensetzung vorhandene/n Erhärtungsbeschleuniger ist/sind vorzugsweise chloridfrei. Chloridhaltige Erhärtungsbeschleuniger sind im Normalfall auf einer Baustelle unerwünscht, weil sie sowohl an den Bewehrungseisen und allenfalls Stahlfasern im Beton wie auch an Baustellengeräten zur Korrosion führen können. Außerdem ist bekannt, dass chloridhaltige Erhärtungsbeschleuniger die Chemikalienbeständigkeit, insbesondere die Sulfatbeständigkeit des Zements, stark reduzieren. Als Beispiel für einen chloridfreien Erhärtungsbeschleuniger, der in der Erfindung zum Einsatz kommen kann, ist der Erhärtungsbeschleuniger X-Seed 100 (BASF) zu nennen.

Ein für die vorliegende Erfindung geeignetes Fließmittel ist Masterglenium ACE 430 (BASF).

Ein weiterer Gegenstand der Erfindung ist daher ein Hochleistungsbeton bzw. ein Ultrahochleistungsbeton, d.h. ein Festbeton, der durch Erhärten einer erfindungsgemäßen Betonzusammensetzung wie hierin beschrieben erhältlich ist, wobei zum Erhalt einer hohen Frühfestigkeit eine Frischbetontemperatur der Betonzusammensetzung zwischen 23°C und 35 °C zu halten ist.

Die Mischreihenfolge der einzelnen Komponenten der Betonzusammensetzung spielt dabei keine entscheidende Rolle, solange die Frischbetontemperatur bei 23°C bis 35°C gehalten wird. Nach Wasserzugabe hat der Beton eine Verarbeitungszeit von > 0,5 Stunden bis zu ca. 1,5 Stunden. In Versuchen (siehe nachstehende Beispiele) konnte festgestellt werden, dass der Beton nach 28 Tagen Lagerung bei Raumklima (20°C) eine Würfeldruckfestigkeit von > 130 N/mm² und eine zentrische Zugfestigkeit von > 5 N/mm² erreicht. Durch die Zugabe von Mikrostahlfasern konnten diese Eigenschaften weiter gesteigert werden.

Je nach Anforderung kann die Verarbeitbarkeit (Betonkonsistenz) von F45 (normal verarbeitbar) bis SVB (selbstverdichtender Beton) eingestellt werden. Dies erfolgt zum einen über die Fließmitteldosierung und zum anderen durch die Anpassung/Änderung des Leimvolumens. Unter Leimvolumen ist das stoffliche Volumen (Liter) von Zement, Mikrosilika, Gesteinsmehl und/oder Quarzmehl, Fließmittel, Wasser und Erhärtungsbeschleuniger zu verstehen. Eine Erhöhung des Leimvolumens führt bei gleicher Fließmittelmenge zu fließfähigeren Frischbetoneigenschaften. Der Beton kann entweder vor Ort (in situ) hergestellt oder von einem naheliegenden Mischwerk auf die Baustelle gebracht werden.

Ein weiterer Gegenstand der Erfindung ist daher eine Betonkonstruktion, die einen Hoch- oder Ultrahochleistungsbeton umfasst, der durch Erhärten einer Betonzusammensetzung gemäß der Erfindung erhalten wird, wobei die Frischbetontemperatur der Betonzusammensetzung zwischen 23 und 35°C liegt.

Die Erfindung ist besonders geeignet für die hochwertige und dauerhafte Sanierung und Verstärkung von Verkehrsflächen (z.B. Autobahnen, Schnellstraßen, Flugzeuglandebahnen) in sehr kurzen Zeiträumen.

Die Erfindung und deren Vorteile werden anhand der folgenden Beispiele näher erläutert.

### 1. BEISPIEL 1- Ultrahochleistungsbeton und Herstellungsverfahren

### 1.1. Betonzusammensetzung

Tabelle 1 zeigt ein Beispiel für eine Betonzusammensetzung gemäß der Erfindung zur Herstellung von Ultrahochleistungsbeton.

**Tabelle 1:**

| **Bestandteil** | **Absolute Werte** | **Gew.-% der Zementmasse** |
|---|---|---|
| Zement | 620 kg/m³ | |
| Mikrosilika [0,04 -10µm Korngröße] | 56 kg/m³ | 9 Gew.-% der Zementmasse |
| Quarzmehl [0,3 - 70 µm Korngröße] | 155 kg/m³ | 25 Gew.-% der Zementmasse |
| Wasser (exklusive Wasser im Fließmittel und im Erhärtungsbeschleuniger) | 166 kg/m³ | |
| Fließmittel (Masterglenium ACE 430, BASF; 70% Wassergehalt) | 14,6 kg/m³ | 2,35 Gew.-% der Zementmasse |
| Erhärtungsbeschleuniger (X-Seed 100, BASF; 70% Wassergehalt) | 24,8 kg/m³ | 4 Gew.-% der Zementmasse |
| Zuschlag [0,05 - 9 mm Korngröße] | 1331 kg/m³ | |
| Stahlfasern | 90 kg/m³ | |
| Wasserzementwert (w/z) | 0,314 | |
| Wasser/Bindemittel-Wert (w/b) | 0,288 | |

### 1.2. Herstellung des Frischbetons

Die Komponenten der Betonzusammensetzung aus Tabelle 1 werden zusammengemischt, wobei die Mischreihenfolge keine entscheidende Rolle spielt, solange die Frischbetontemperatur bei 23°C bis 35°C gehalten wird. Nach Wasserzugabe hat der Beton eine Verarbeitungszeit von > 0,5 h und < 1h 15 min Stunden.

### 1.3. Festbetoneigenschaften und deren Messung

Die Tragfähigkeitseigenschaften (Druck- und Zugfestigkeit) des mittels der Betonzusammensetzung aus Tabelle 1 erhaltenen Festbetons wurden bestimmt.

Der Beton erreichte bereits 6 Stunden nach der Wasserzugabe eine Würfeldruckfestigkeit von > 35 N/mm². Nach 28 Tagen Lagerung bei Raumklima (20°C) wurde eine Würfeldruckfestigkeit von > 150 N/mm² und eine zentrische Zugfestigkeit von > 5 N/mm² erreicht. Die Messung der Würfeldruckfestigkeit erfolgte an Würfeln mit einer Kantenlänge von 100 mm und einer Belastungsgeschwindigkeit von 0,6 MPa/s (gemäß ONR 23303).

### 2. BEISPIEL 2 - Hochleistungsbeton und Herstellungsverfahren

### 2.1. Betonzusammensetzung

Tabelle 2 zeigt ein Beispiel für eine Betonzusammensetzung gemäß der Erfindung zur Herstellung von Hochleistungsbeton.

**Tabelle 2:**

| **Bestandteil** | **Absolute Werte** | **Gew.-% der Zementmasse** |
|---|---|---|
| Zement | 600 kg/m³ | |
| Mikrosilika [0,04 10 µm Korngröße] | 54 kg/m³ | 9 Gew.-% der Zementmasse |
| Quarzmehl [0,3 - 70 µm Korngröße] | 120 kg/m³ | 20 Gew.-% der Zementmasse |
| Wasser (exklusive Wasser im Fließmittel und im Erhärtungsbeschleuniger) | 166 kg/m³ | |
| Fließmittel (Masterglenium ACE 430, BASF; 70% Wassergehalt) | 13,2 kg/m³ | 2,2 Gew.-% der Zementmasse |
| Erhärtungsbeschleuniger (X-Seed 100, BASF; 70% Wassergehalt) | 24 kg/m³ | 4 Gew.-% der Zementmasse |
| Zuschlag [0,05-9 mm Korngröße] | 1435 kg/m³ | |
| Stahlfasern | 0 kg/m³ | |
| Wasserzementwert (w/z) | 0,32 | |
| Wasser/Bindemittel-Wert (w/b) | 0,294 | |

### 2.2. Herstellung des Frischbetons

Die Komponenten der Betonzusammensetzung aus Tabelle 2 werden zusammengemischt, wobei die Mischreihenfolge keine entscheidende Rolle spielt, solange die Frischbetontemperatur bei 23°C bis 35°C gehalten wird. Nach Wasserzugabe hat der Beton eine Verarbeitungszeit von > 0,5 h und < 1,5 h.

### 2.3. Festbetoneigenschaften und deren Messung

Die Tragfähigkeitseigenschaften des mittels der Betonzusammensetzung aus Tabelle 2 erhaltenen Festbetons wurden bestimmt.

Der Beton erreichte bereits 6 Stunden nach der Wasserzugabe eine Würfeldruckfestigkeit von > 30 N/mm². Nach 28 Tagen Lagerung bei Raumklima (20°C) wurde eine Würfeldruckfestigkeit von > 130. N/mm² erreicht. Die Messung der Würfeldruckfestigkeit erfolgte an Würfeln mit einer Kantenlänge von 100 mm und einer Belastungsgeschwindigkeit von 0,6 MPa/s (gemäß ONR 23303).

## Patentansprüche

1. Betonzusammensetzung, welche pro Kubikmeter [m³] Beton aufweist:
• 500 - 750 kg Zement mit einem Blaine Wert > 4000 und < 6000 cm²/g,
• 30 -100 kg Mikrosilika,
• 100 - 400 kg Gesteinsmehl und/ oder Quarzmehl,
• 10 - 40 kg Fließmittel,
• 155 - 250 kg Wasser, einschließlich des im Fließmittel und im Erhärtungsbeschleuniger enthaltenen Wassers,
• 10 - 40 kg Erhärtungsbeschleuniger,
• 600 - 2000 kg Zuschlagstoff mit einer Korngröße > 0,01 mm und < 10 mm, und
• 0 - 250 kg Mikrofasern,
wobei die Betonzusammensetzung einen Wasserzementwert von 0,31 - 0,33 aufweist.

2. Betonzusammensetzung nach Anspruch 1, welche pro Kubikmeter [m³] Beton aufweist:
• 600 - 650 kg Zement mit einem Blaine Wert > 4000 und < 6000 cm²/g,
• 36 - 78 kg Mikrosilika,
• 120 - 195 kg Gesteinsmehl und/ oder Quarzmehl,
• 15 - 26 kg Fließmittel,
• 186 - 215 kg Wasser, einschließlich des im Fließmittel und im Erhärtungsbeschleuniger enthaltenen Wassers,
• 15 - 26 kg Erhärtungsbeschleuniger,
• 1100 - 1500 kg Zuschlagstoff mit einer Korngröße > 0,01 mm und < 10 mm, und
• 0 - 100 kg Mikrofasern.

3. Betonzusammensetzung nach Anspruch 1 oder 2, **dadurch gekennzeichnet, dass** der Zement ein Portlandzement CEM I 52,5 R oder CEM I 42,5 R ist.

4. Betonzusammensetzung nach einem der Ansprüche 1 bis 3, **dadurch gekennzeichnet, dass** das Mikrosilika eine Korngröße > 0,01 µm und < 10 µm aufweist.

5. Betonzusammensetzung nach einem der Ansprüche 1 bis 4, **dadurch gekennzeichnet, dass** das Gesteinsmehl bzw. das Quarzmehl eine Korngröße von > 0,1 µm und < 100 µm aufweist.

6. Betonzusammensetzung nach einem der Ansprüche 1 bis 5, **dadurch gekennzeichnet, dass** die Mikrofasern aus der Gruppe bestehend aus Kunststofffasern, synthetischen Fasern, Stahlfasern oder einer Mischung davon ausgewählt sind.

7. Betonzusammensetzung nach einem der Ansprüche 1 bis 6, **dadurch gekennzeichnet, dass** der Wasser/Bindemittel-Wert 0,28 bis 0,30 beträgt.

8. Betonzusammensetzung nach einem der Ansprüche 1 bis 7, **dadurch gekennzeichnet, dass** der Gehalt an Mikrosilika höchstens 9 Gew.-% in Bezug auf den Zementgehalt beträgt.

9. Betonzusammensetzung nach einem der Ansprüche 1 bis 8, **dadurch gekennzeichnet, dass** sie frei von chloridhaltigen Erhärtungsbeschleunigern ist.

10. Hoch- oder Ultrahochleistungsbeton erhältlich durch Erhärten einer Betonzusammensetzung nach einem der Ansprüche 1 bis 9, wobei die Frischbetontemperatur der Betonzusammensetzung zwischen 23 und 35°C liegt.
